# EUROPÄISCHE PATENTANMELDUNG

(11) **EP 0 702 900 A2**
(43) Veröffentlichungstag der Anmeldung: **27.03.1996**
(21) Anmeldenummer: 95890168.8
(22) Anmeldetag: 22.09.1995
(51) Int. Cl.: A23F 5/02, A23P 1/14

(54) **Verfahren zum Konditionieren thermisch expandierbarer Festkörper in einem heissgasbetriebenen Wanderbett**

(30) Priorität: 23.09.1994 AT 1804/94
(71) Anmelder: Prior, Adalbert, Dipl.-Ing. Dr., A-6840 Götzis (AT)
(72) Erfinder: Prior, Adalbert, Dipl.-Ing. Dr., A-6840 Götzis (AT)
(74) Vertreter: Collin, Hans, Dipl.-Ing. Dr.

(57) **Zusammenfassung**

Vorgeschlagen wird ein Verfahren zum Konditionieren thermisch expandierbarer Festkörper in einem heißgasbetriebenen Wanderbett mit dem Kennzeichen, daß die Körper als Wanderbett mit hohem Temperaturgradienten zwischen Bettunterfläche und Bettoberfläche so bewegt werden, daß im Bereich der heißen Bettunterfläche Volumsvergrößerung unter Ausbildung von Hohlräumen in den Körpern eintritt und die Körper in kühleren Bettbereichen zumindest teilweise mit Additiven beladen werden, und daß gegebenenfalls anschließend eine Reifungsbehandlung unter Einwirkung der Additive auf die Körper durchgeführt wird.

## Beschreibung

Die Erfindung betrifft ein Verfahren zum Konditionieren thermisch expandierbarer Festkörper in einem heißgasbetriebenen Wanderbett.

Gasgetriebene Wanderbetten zum Behandeln von Stoffen in einem turbulenten, im Reaktor im Kreislauf geführten Bett aus teilchenförmigem Material sind bereits vorgeschlagen worden. Dabei werden die Stoffe zusammen mit dem Treibfluid von unten in das Materialbett in Umlaufrichtung eingeblasen, so daß die Stoffe während der Behandlung in einem in Horizontalrichtung als Band umlaufenden turbulenten Materialbett gehalten werden.

Demgegenüber ist das erfindungsgemäße Verfahren vor allem dadurch gekennzeichnet, daß die Körper als Wanderbett mit hohem Temperaturgradienten zwischen Bettunterfläche und Bettoberfläche so bewegt werden, daß im Bereich der heißen Bettunterfläche Volumsvergrößerung unter Ausbildung von Hohlräumen in den Körpern eintritt und die Körper in kühleren Bettbereichen zumindest teilweise mit Additiven beladen werden, und daß gegebenenfalls anschließend eine Reifungsbehandlung unter Einwirkung der Additive auf die Körper durchgeführt wird.

Dabei bilden die zu konditionierenden Festkörper selbst das Wanderbett.

Es versteht sich, daß zum Erzielen eines hohen Temperaturgradienten im Wanderbett dieses kein turbulentes Bett sein darf, sondern die dem Treibfluid innewohnende Bewegungsenergie so abzustimmen ist, daß die Festkörper während ihrer Bewegung lediglich sanft gemischt werden, so daß innerhalb der Verweilzeit im Reaktor jeder Festkörper, der an der Bettunterseite thermisch expandiert worden war, im Anschluß daran in eine kühlere Zone zur Aufnahme der Additive gelangt. Demgemäß erfolgt im kontinuierlichen Betrieb die Abnahme der konditionierten Feststoffe von der Wanderbettoberfläche, wenn die gegebenenfalls folgende Reifungsbehandlung nicht im Reaktor durchgeführt wird. Bei Chargenbetrieb werden die gesamten Feststoffe einer Charge nach dem Konditionieren einfach aus dem Reaktor ausgebracht, können aber auch im Reaktor gereift werden.

Vorzugsweise werden die Additive zusammen mit dem Heißgas dem Wanderbett zugeführt, wenn sie temperaturstabil sind; ansonsten in den kühleren Bettbereichen gesondert zudosiert. Bei den Additiven kann es sich z.B. um Flüssigkeiten (auch Feststofflösungen) handeln, die in den kühleren Bettbereichen kondensieren; anderseits können auch Stäube eingesetzt und z.B. auf die kühle Wanderbettoberfläche aufdosiert werden.

Das Heißgas wird in Abhängigkeit von den Eigenschaften der zu konditionierenden Festkörper und der Additive ausgewählt und kann z.B. Luft, Dampf, ein Dampf/Luftgemisch oder ein Inertgas wie Stickstoff, aber auch z.B. Verbrennungsabgas sein. Bei Anwendung eines Inertgases und bei im Abgas verbleibenden dampfförmigen oder festen Additiven wird das Abgas rezirkuliert, wobei in der Abgasrückführung entsprechende Feststoffabscheider vorgesehen sein können.

Die auf die Konditionierung gegebenenfalls folgende Reifungsbehandlung kann außerhalb des Wanderbetts, d.h. außerhalb des Reaktors erfolgen; dabei wird vorgezogen, keine Additive mehr zuzusetzen.

Das erfindungsgemäße Verfahren ist besonders geeignet zum Konditionieren von expandierbaren eßbaren Produkten, die eine gewisse Abriebfestigkeit aufweisen, und insbesondere zum Rösten von körnigen Feststoffen wie z.B. Malz oder insbesondere Kaffeebohnen.

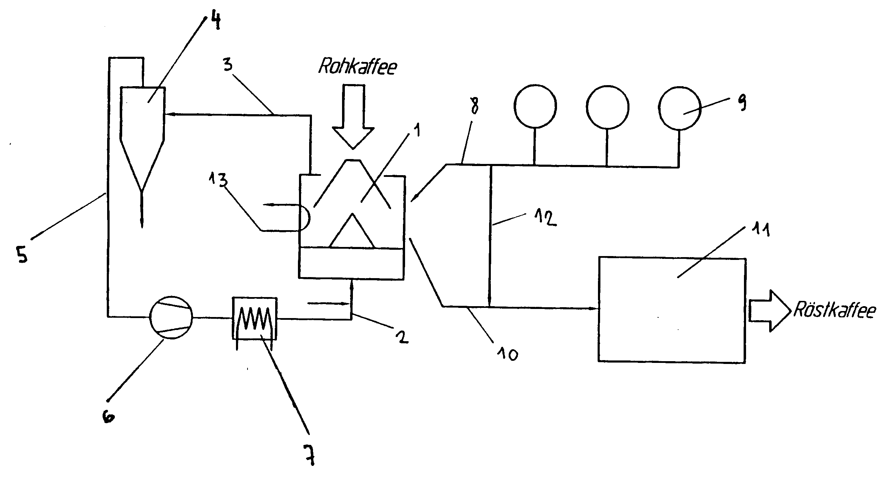

Die Erfindung wird im folgenden anhand eines Kaffeeröstverfahrens unter Bezugnahme auf die Zeichnung beispielsweise näher beschrieben, die ein Blockschema der Anlage zeigt.

Der Rohkaffee wird von oben in einen Konditionierreaktor 1 eingespeist und wandert dort als Bett im Kreis, wobei die Kaffeebohnen thermisch expandiert werden.

Die thermische und Bewegungsenergie wird von unten über die Leitung 2 durch ein Heißgas (N₂ oder Luft, wobei gegebenenfalls Dampf eingespeist wird) zugeführt, wobei der Heißgasstrom tangential gegen die Bettunterseite gerichtet wird.

Das Abgas aus dem Reaktor wird über die Abgasleitung 3 einem Zyklon 4 zugeführt, über den die beim thermischen Expandieren abplatzenden, extrem leichten und vom Abgas mitgerissenen Silberhäutchen zusammen mit Flugstaub abgeschieden werden. Das Abgas gelangt sodann über die Leitung 5 zu einem Umwälzgebläse 6 und zu einem Heizwärmetauscher oder Elektroheizgerät 7 und wird anschließend wieder, nach entsprechendem Gas-Make-up (Dampf), in den Reaktor 1 eingespeist. Über eine Leitung 8 werden Aromazusatzstoffe aus Vorratsbehältern 9 in den kühleren Wanderbettbereich eindosiert, um die expandierten Kaffeebohnen zu beladen.

Die expandierten und beladenen Kaffeebohnen werden aus dem oberen Bettbereich über eine Förderleitung 10 abgezogen und in einem herkömmlichen Kaffeeröster 11 geröstet, wobei in die Förderleitung 10 über eine Zweigleitung 12 der Aromazusätzezuführleitung 8 gegebenenfalls weitere Aromazusatzstoffe einbringbar sind.

Im Reaktor 1 erfolgt eine Schwerstoffabtrennung (Steine und andere Fremdkörper) am Boden des Wanderbetts durch den Unterschied im spezifischen Gewicht; dies ist in der Zeichnung mit 13 schematisch angedeutet.

Demgegenüber wird beim klassischen Kaffeeröstverfahren der Rohkaffee, wie er ist, geröstet und gelangt dann in eine Trennanlage, wo die Silberhäutchen sowie Steine und andere Fremdkörper vom gerösteten Kaffee abgetrennt werden. Mit anderen Worten heißt das, daß die Kaffeebohnen zusammen mit allen Abfall- und Fremdstoffen geröstet werden, was die Kaffeequalität (Geschmack) erheblich beeinträchtigen kann.

Im Gegensatz dazu werden erfindungsgemäß alle Abfall- und Fremdstoffe bereits beim Konditionieren und vor der eigentlichen Röstung abgeschieden, so daß in Abhängigkeit von den Additiven und dank der expandierten Form der Kaffeebohnen ein geschmacksorientierbares Rösten ohne Ausbildung stärker gebrannter Randzonen an den Bohnen (Überbrennen) in einfacher Weise möglich ist.

Das erfindungsgemäße Verfahren nach dem beschriebenen Beispiel kann gegebenenfalls dadurch vereinfacht werden, daß keine Additive zugesetzt werden. Auch dadurch lassen sich beträchtliche Vorteile gegenüber einer herkömmlichen Kaffeeröstung (nicht expandierte Bohnen) erzielen und auch diese vereinfachte Variante wird als ebenso erfindungsgemäß angesehen.

## Patentansprüche

1. Verfahren zum Konditionieren thermisch expandierbarer Festkörper in einem heißgasbetriebenen Wanderbett, dadurch gekennzeichnet, daß die Körper als Wanderbett mit hohem Temperaturgradienten zwischen Bettunterfläche und Bettoberfläche so bewegt werden, daß im Bereich der heißen Bettunterfläche Volumsvergrößerung unter Ausbildung von Hohlräumen in den Körpern eintritt und die Körper in kühleren Bettbereichen zumindest teilweise mit Additiven beladen werden, und daß gegebenenfalls anschließend eine Reifungsbehandlung unter Einwirkung der Additive auf die Körper durchgeführt wird.

2. Verfahren nach Anspruch 1, dadurch gekennzeichnet, daß die Additive zusammen mit dem Heißgas, dem gegebenenfalls Dampf eingespeist wird, dem Wanderbett zugeführt werden.

3. Verfahren nach Anspruch 1 oder 2, dadurch gekennzeichnet, daß die Reifungsbehandlung ohne Additivzufuhr, gegebenenfalls außerhalb des Wanderbetts, durchgeführt wird.

4. Verfahren nach einem der Ansprüche 1 bis 3 zum Konditionieren von eßbaren Produkten.

5. Verfahren nach einem der Ansprüche 1 bis 4 zum Konditionieren und Rösten von Kaffeebohnen.
